# EUROPEAN PATENT SPECIFICATION

(11) **EP 1 925 049 B1**
(45) Date of publication and mention of the grant of the patent: **25.02.2015**
(21) Application number: 06789910.4
(22) Date of filing: 23.08.2006
(51) Int. Cl.: B01J 37/02, B01J 23/42, B01J 31/06, H01M 8/10, H01M 4/86, H01M 4/88, H01M 4/92

(54) **Method of making an electrode for a proton exchange membrane fuel cell**
Verfahren zur Herstellung einer Elektrode für eine Protonenaustauschmembran-Brennstoffzelle
Procédé de préparation d'un électrode pour un pile à combustible à membrane échangeuse de protons

(30) Priority: 13.09.2005 US 224879
(43) Date of publication of application: 28.05.2008
(73) Proprietor: 3M Innovative Properties Company, St. Paul, MN 55133-3427 (US)
(72) Inventor: DEBE, Mark, K., Saint Paul, Minnesota 55133-3427 (US); ZIEGLER, Raymond, J., Saint Paul, Minnesota 55133-3427 (US); HENDRICKS, Susan, M., Saint Paul, Minnesota 55133-3427 (US)
(74) Representative: Vossius & Partner
(86) International application number: PCT/US2006/032703
(87) International publication number: WO 2007/032864

(56) References cited:
- WO-A-94/15210
- WO-A-98/18741
- WO-A-2005/008813
- US-A- 5 879 827
- US-A- 6 136 412
- US-A1- 2002 192 441
- US-A1- 2005 053 826

## Description

### FIELD OF THE INVENTION

The present invention relates generally to nanostructured films having increased surface area and methods of making such films.

### BACKGROUND OF THE INVENTION

Electrochemical devices, such as proton exchange membrane fuel cells, sensors, electrolyzers, chlor-alkali separation membranes, and the like, have been constructed from membrane electrode assemblies (MEAs). An MEA used in a typical electrochemical cell, for example, includes an ion conductive membrane (ICM) that is in contact with an anode and a cathode. The anode/membrane/cathode structure is sandwiched between two porous, electrically conductive elements called diffusion current collectors (DCCs) to form a five layer MEA. Ions formed at the anode are transported to the cathode, allowing current to flow in an external circuit connecting the electrodes.

The ICM typically comprises a polymeric electrolyte material, which may constitute its own structural support or may be contained in a porous structural membrane. Cation- or proton-transporting polymeric electrolyte materials may be salts of polymers containing anionic groups and are often partially or completely fluorinated.

Fuel cell MEAs have been constructed using catalyst electrodes in the form of applied dispersions of either Pt or carbon supported Pt catalysts. A catalyst form used for polymer electrolyte membranes is Pt or Pt alloys coated onto larger carbon particles by wet chemical methods, such as reduction of chloroplatnic acid. This form of catalyst is dispersed with ionomeric binders, solvents, and often polytetrafluoroethylene (PTFE) particles to form an ink, paste, or dispersion that is applied either to the membrane or the diffusion current collector.

More recently, catalyst layers have been formed using nanostructured support elements bearing particles or thin films of catalytic material. The nanostructured catalyst electrodes may be incorporated into very thin surface layers of the ICM forming a dense distribution of catalyst particles. The use of nanostructured thin film (NSTF) catalyst layers allows much higher catalyst utilization and more durable catalyst than catalyst layers formed by dispersion methods.

The present invention describes methods for making enhanced catalyst layers used for chemical and electrochemical devices and offers various advantages over the prior art.

### SUMMARY OF THE INVENTION

The present invention is directed to methods of making multilayered nanostructured films having increased surface area. One embodiment of the invention is directed to an article comprising multiple nanostructured layers, the nanostructured layers comprising acicular nanostructured support elements.

In various implementations, the nanostructured support elements may have a mean cross sectional dimension less than about 0.1 µm and a length greater than about 0.6 µm. Each of the nanostructured layers may have a areal density of nanostructured support elements in a range from about 10⁷ to about 10¹¹ nanostructured support elements per cm². Each nanostructured layer may have a thickness of about 0.3 to about 1.3 µm. There may be about two to ten layers per multilayered film. The nanostructured support elements is be formed of an organic-based material, such as C.I. PIGMENT 149 denoted herein as "perylene red."

According to one aspect of the invention, nanostructured support elements of the nanostructured layers may be used to form nanostructured thin film catalyst layers. In these implementations, the nanostructured support elements of the multilayered structure are coated with a conformal coating of catalyst material.

The multilayer film of nanostructured elements may be formed on a substrate. The substrate may be porous and/or may have a mictrotextured surface. The multiple nanostructured layers may be disposed on a surface of an ion conductive membrane or on a diffusion current collector, for example.

Catalyst layers formed using the multilayer films may be used to form membrane electrode assemblies, which may in turn be incorporated into various electrochemical devices such as proton exchange membrane (PEM) fuel cells and/or electrolyzers.

The invention involves a method for forming multiple nanostructured layers. A first layer of material is deposited on a substrate and is annealed to form a first layer of nanostructured support elements. The growth sites of the nanostructured support elements of the first layer are occluded, for example, by depositing an occluding material, such as a metal, over the nanostructured support elements of the first layer. A second layer of material is deposited on the first layer of nanostructured support elements. The second layer of material is annealed to form a second layer of nanostructured support elements.

The first and the second layers of material comprise an organic-based material such as perylene red. Formation of the multiple layers may involve annealing the first layer and the second layer of material a temperature of about 230° C to about 270° C for about 3 to about 60 minutes.

According to one aspect of the invention, a catalyst material, such as a platinum group metal, may be deposited on the first and second layers to conformally coat the nanostructured support elements of the first and second layers.

According to one implementation, the multilayered nanostructured film may be transferred to at least one surface of an ion conductive membrane to form a catalyst coated membrane. According to another implementation, the multilayered nanostructured film may be formed on a diffusion current collector. The catalyst coated multilayered nanostructured film may be incorporated into a membrane electrode assembly.

The above summary of the present invention is not intended to describe each embodiment or every implementation of the present invention. Advantages and attainments, together with a more complete understanding of the invention, will become apparent and appreciated by referring to the following detailed description and claims taken in conjunction with the accompanying drawings.

### BRIEF DESCRIPTION OF THE DRAWINGS

Figure 1 is a flowchart of a method of making a multilayer nanostructured film in accordance with an embodiment of the invention;
Figure 2 is a flowchart of a method of making a catalyst coated ion conductive membrane in accordance with embodiments of the invention;
Figure 3 is a scanning electron micrograph of a cross section of a surface where the nanostructured film conforms to a microtextured shape in accordance with embodiments of the invention;
Figure 4A illustrates a fuel cell that utilizes one or more nanostructured catalyst layers in accordance with embodiments of the invention;
Figure 4B illustrates an embodiment of a unitized cell assembly comprising MEA having nanostructured catalyst layers formed in accordance with embodiments of the invention;
Figures 5-8 depict systems in which a fuel cell assembly as illustrated by the embodiments herein may be utilized;
Figure 9A is a SEM cross-sectional view of a sample having two layers of nanostructured support elements in accordance with embodiments of the invention;
Figure 9B is a SEM cross-sectional view of a sample having four layers of nanostructured support elements in accordance with an embodiment of the invention; and
Figures 10A and 10B show SEM cross-sections at two magnifications of a double layer nanostructured film on a microstructured substrate in accordance with an embodiment of the invention.

While the invention is amenable to various modifications and alternative forms, specifics thereof have been shown by way of example in the drawings and will be described in detail. It is to be understood, however, that the intention is not to limit the invention to the particular embodiments described. On the contrary, the intention is to cover all modifications, equivalents, and alternatives falling within the scope of the invention as defined by the appended claims.

### DETAILED DESCRIPTION OF VARIOUS EMBODIMENTS

In the following description of the illustrated embodiments, reference is made to the accompanying drawings which form a part hereof, and in which is shown by way of illustration, various embodiments in which the invention may be practiced. It is to be understood that the embodiments may be utilized and structural changes may be made without departing from the scope of the present invention.

One important property of a surface or thin film is its surface area. The degree to which molecules adsorb onto, react with other molecules or with each other on the surface depends directly on the available surface area. In heterogeneous chemical or electrochemical catalysis the effectiveness of the processes occurring on the surface is determined by the amount of surface area. It is advantageous to be able to control and increase the area of a surface. Forming structured support elements (microstructured and/or nanostructured support elements) increases the surface area of a layer.

The present invention is directed to methods for making multilayered nanostructured films. Each layer of a multilayered nanostructured film has a number of nanostructured support elements or whiskers. For example, each of the layers of a multilayered film may have an areal density of nanostructured support elements in a range from about 10⁷ to about 10¹¹ nanostructured support elements per cm². The multilayered nanostructured film may comprise any number of layers. For example, the number of layers may be in a range of about two to about ten layers.

Multilayered films may be formed having an increased areal number density (numbers/cm²) of nanostructured support elements as compared to single layered films, thus providing increased surface area for supporting catalyst particles. The higher areal number density of catalyst support elements allows higher mass specific areas (m²/g) to be obtained. The multilayered nanostructured films described herein are particularly useful in devices where functional activity is related to the surface area available to support surface active particles or thin film coatings.

The examples provided herein relate primarily to fuel cell applications. However, the multilayered nanostructured layers may be used in various chemical and electrochemical devices, including, for example, filters, optical absorbers, batteries, electrolyzers, photovoltaic devices, sensors, flexible electronic circuits, reformers, catalytic converters, oxidizers, and/or biological adsorption supports, among other devices.

The multilayered films described in the embodiments herein can be used to form catalyst layers used in membrane electrode assemblies (MEAs). In these applications, the surface area of the catalyst layers is related to their performance in a fuel cell or other electrochemical device. The surface area of nanostructured thin film catalysts is determined by at least four principal characteristics occurring at different spatial scales. These characteristics include: the surface roughness of the catalyst coating on each individual nanostructured support element, the geometric surface area of an average catalyst coated nanostructured element, which may be approximated as a right circular cylinder, the number of support elements per unit area, and the surface area of the substrate on which the nanostructured support elements are grown.

To a first approximation, the geometric surface area of a single layer nanostructured film can be simply calculated by treating the individual nanostructured elements as right circular cylinders, having smooth surfaces, diameters W, lengths L, and number density N per square cm. Neglecting, for simplicity, the area of the nanostructured element tips, the surface area of the film per unit planar area is simply S = πWxLxN. If in addition the surfaces of the nanostructure elements are not smooth, but have a roughness factor R

(>1) compared to a smooth surface, then S = πWxLxNxR. Finally, if the nanostructures are grown on a larger scale microstructured substrate having a surface area increase over the planar case of α, then S= απWxLxNxR. It can be seen from this expression for S that there are five parameters or ways to increase S. The multilayered films described herein provide a higher density N of nanostructured elements per unit area, thus increasing the surface area S of the catalyst layer.

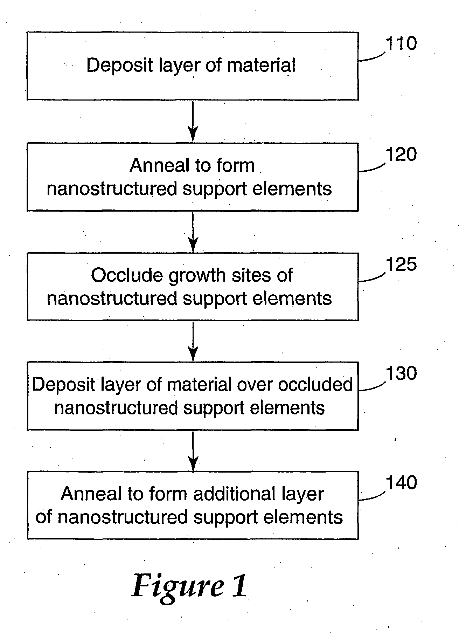

The formation of a multilayered nanostructured film in accordance with embodiments of the present invention is illustrated in the flowchart of Figure 1. The process yields multiple layers of acicular nanostructured support elements. The process involves deposition 110 of a first layer of material on substrate and formation 120 of nanostructured support elements during a first annealing step. Growth of the nanostructured support elements of the first layer is inhibited 125. For example, an occluding material is deposited over the nanostructured support elements. The occluding material inhibits further growth of the nanostructured support elements. A second layer of material is deposited 130 over the first layer of nanostructured support elements. A second annealing step 140 produces a second layer of nanostructured support elements. Additional layers of nanostructured support elements may be formed. For example, about two to about ten layers may be formed. The surface area of the film can be increased by multiple factors equal to the number of stacked layers of nanostructured support elements.

Materials useful as a substrate for deposition of the nanostructured layers include those which maintain their integrity at the temperature and vacuum imposed upon them during the vapor deposition and annealing steps. The substrate can be flexible or rigid, planar or non-planar, convex, concave, textured, or combinations thereof. The substrate may be made of a porous material, for example, which is useful in filter applications.

Preferred substrate materials include organic materials and inorganic materials (including, for example, glasses, ceramics, metals, and semiconductors). Preferred inorganic substrate materials are glass or metal. A preferred organic substrate material is a polyimide. More preferably, the substrate, if non-metallic, is metallized with a 10-70 nm thick layer of an electrically conductive metal for removal of static charge or to provide useful optical properties. The layer may be discontinuous.

Representative organic substrates include those that are stable at the annealing temperature, for example, polymers such as polyimide film (commercially available, for example, under the trade designation "KAPTON" from DuPont Electronics, Wilmington, Del.), high temperature stable polyimides, polyesters, polyamids, and polyaramids.

Metals useful as substrates include, for example, aluminum, cobalt, chrome, molybdenum, nickel, platinum, tantalum, or combinations thereof. Ceramics useful as a substrate material include, for example, metal or non-metal oxides such as alumina and silica. A useful inorganic nonmetal is silicon.

The nanostructured support elements can have a variety of orientations and straight and curved shapes, (e.g., whiskers, rods, cones, pyramids, spheres, cylinders, laths, tubes, and the like, that can be twisted, curved, hollow or straight). The nanostructured support elements is formed using an organic pigment, such as C.I. PIGMENT RED 149 (perylene red). The materials used to for the support elements preferably are capable of forming a continuous layer when deposited onto a substrate. In some applications, the thickness of the continuous layer is in the range from about 1 nanometer to about one thousand nanometers.

Methods for forming the nanostructured support elements are described in commonly owned U.S. Patents 4,812352, 5,879,827, and 6,136,412. Methods for making organic nanostructured layers are disclosed in Materials Science and Engineering, A158 (1992), pp. 1-6; J. Vac. Sci. Technol. A, 5 (4), July/August, 1987, pp. 1914-16; J. Vac. Sci. Technol. A, 6, (3), May/August, 1988, pp. 1907-11; Thin Solid Films, 186, 1990, pp. 327-47; J. Mat. Sci., 25, 1990, pp. 5257-68; Rapidly Quenched Metals, Proc. of the Fifth Int. Conf. on Rapidly Quenched Metals, Wurzburg, Germany (Sep. 3-7, 1984), S. Steeb et al., eds., Elsevier Science Publishers B.V., New York, (1985), pp. 1117-24; Photo. Sci. and Eng., 24, (4), July/August, 1980, pp. 211-16; and U.S. Pat. Nos. 4,568,598, 4,340,276. Properties of catalyst layers using carbon nanotube arrays are disclosed in the article "High Dispersion and Electrocatalytic Properties of Platinum on Well-Aligned Carbon Nanotube Arrays," Carbon 42 (2004) 191-197.

The deposition of material from which the nanostructures are grown may involve coating a layer of organic pigment onto a substrate using techniques known in the art for applying a layer of an organic material onto a substrate, including, for example, vapor phase deposition (e.g., vacuum evaporation, sublimation, and chemical vapor deposition), and solution coating or dispersion coating (e.g., dip coating, spray coating, spin coating, blade or knife coating, bar coating, roll coating, and pour coating (i.e., pouring a liquid onto a surface and allowing the liquid to flow over the surface)).

In one embodiment, an organic layer of perylene red, or other suitable material, is applied by physical vacuum vapor deposition (i.e., sublimation of the organic material under an applied vacuum). The thickness of the perylene red layer may be in the range from about 0.03 to about 0.5 µm, for example. The organic layer is annealed in a vacuum (i.e., less than about 0.1 Pascal) during a first annealing step to grow the nanostructured support elements from the as-deposited perylene red. The coated perylene red may be annealed, for example, at a temperature in the range from about 160 to about 270°C. The annealing time necessary to convert the original organic layer to the nanostructured layer is dependent on the annealing temperature.

Typically, an annealing time in the range from about 2 minutes to about 6 hours is sufficient. For example, the annealing may be in the range from about 20 minutes to about 4 hours. For perylene red, the optimum annealing temperature to convert substantially all of the original organic layer nanostructured support elements, but not sublime away the originally deposited material, is observed to vary with the deposited layer thickness. Typically, for original organic layer thicknesses of about 0.05 to about 0.15 µm, the annealing temperature is in the range of about 245 to about 270°C.

The basic mechanism for growth of the nanostructured support elements results from emergent screw dislocations in the as-deposited layer that serve as growth sites for the oriented, discrete, crystalline whiskers. As the film is heated (annealed) in vacuum, the perylene molecules diffuse over the surface to the dislocation sites, rather than re-subliming, and begin the growth of the nanostructured support elements.

After initial formation of the nanostructured support elements by the methods described above, further growth of the nanostructured support elements is inhibited. For example, further growth of the support elements may be inhibited by depositing an occluding material over the support elements. The occluding material can be an inorganic material or it can be an organic material including a polymeric material. Useful occluding materials include any metal or other material that can be deposited atomically or in sufficiently small molecules to occlude the screw dislocation growth sites of the nanostructured support elements. For example the occluding material may comprise Pt, Pd, Au, Ru, etc.

The preferred thickness of the occluding material is typically in the range from about 0.2 to about 50 nm. The occluding material may be deposited onto the nanostructured layer using conventional techniques. Any method that avoids disturbance of the nanostructured layer by mechanical forces can be used to deposit the occluding material. Suitable methods include, for example, vapor phase deposition (e.g., vacuum evaporation, sputter coating, and chemical vapor deposition) solution coating or dispersion coating (e.g., dip coating, spray coating, spin coating, pour coating (i.e., pouring a liquid over a surface and allowing the liquid to flow over the nanostructured layer, followed by solvent removal)), immersion coating (i.e., immersing the microstructured layer in a solution for a time sufficient to allow the layer to adsorb molecules from the solution, or colloidals or other particles from a dispersion), electroplating and electroless plating. The occluding material may be deposited by vapor phase deposition methods, such as, for example, ion sputter deposition, cathodic arc deposition, vapor condensation, vacuum sublimation, physical vapor transport, chemical vapor transport, and metalorganic chemical vapor deposition. In some embodiments, the conformal coating material is a catalytic metal or metal alloy.

After inhibiting the growth of the initial nanostructured support elements, a second layer of material is deposited over the existing nanostructured support elements. For example, a second layer of perylene red known to be capable of generating nanostructured layers may be vacuum coated onto existing nanostructured support elements at or near room temperature. A second annealing step follows the second deposition of material. The second deposition and annealing steps form a second layer of nanostructures. In one implementation, the second deposition may involve a coating of perylene red having a thickness of about 500 Angstroms. The assembly is then annealed a second time at a temperature in a range of about 160 to about 270°C for about 2 minutes to about 6 hours.

The nanostructured support elements of the multilayered film formed by the processes described herein may have a vertical dimension greater than about 0.6 µm and a horizontal dimension that ranges from about 0.03 µm to about 0.1 µm. The nanostructured support elements may have an aspect ratio of length to mean cross sectional dimension of about 3:1 to about 100:1. In some implementations, each layer of nanostructured support elements may have a thickness of about 0.3 to about 1.3 µm.

Useful organic materials for forming the nanostructured layers include, for example, planar molecules comprising chains or rings over which *π*-electron density is extensively delocalized. These organic materials generally crystallize in a herringbone configuration. For example, in some embodiments, organic materials broadly classified as polynuclear aromatic hydrocarbons and heterocyclic aromatic compounds are used. These materials include, for example, naphthalenes, phenanthrenes, perylenes, anthracenes, coronenes, and pyrenes. As previously discussed, a useful polynuclear aromatic hydrocarbon is N,N'-di(3,5-xylyl)perylene-3,4,9, 10 bis(dicarboximide) (commercially available under the trade designation "C. I. PIGMENT RED 149" from American Hoechst Corp. of Somerset, N.J.), herein designated "perylene red."

Useful inorganic materials for producing nanostructured layers include, for example, carbon, diamond-like carbon, carbon nanotubes, ceramics (e.g., metal or non-metal oxides such as alumina, silica, iron oxide, and copper oxide; metal or non-metal nitrides such as silicon nitride and titanium nitride; and metal or non-metal carbides such as silicon carbide; metal or non-metal borides such as titanium boride); metal or non-metal sulfides such as cadmium sulfide and zinc sulfide; metal silicides such as magnesium silicide, calcium silicide, and iron silicide; metals (e.g., noble metals such as gold, silver, platinum, osmium, iridium, palladium, ruthenium, rhodium, and combinations thereof; transition metals such as scandium, vanadium, chromium, manganese, cobalt, nickel, copper, zirconium, and combinations thereof, low melting metals such as bismuth, lead, indium, antimony, tin, zinc, and aluminum; refractory metals such as tungsten, rhenium, tantalum, molybdenum, and combinations thereof); and semiconductor materials (e.g., diamond, germanium, selenium, arsenic, silicon, tellurium, gallium arsenide, gallium antimonide, gallium phosphide, aluminum antimonide, indium antimonide, indium tin oxide, zinc antimonide, indium phosphide, aluminum gallium arsenide, zinc telluride, and combinations thereof).

As previously discussed, the multilayer nanostructured films described herein may be used to form nanostructured catalyst layers suitable for use in fuel cell membrane electrode assemblies (MEAs). The increased surface area of the multiple layers advantageously provide higher catalyst loading profiles for MEAs, such as those used in proton exchange membrane (PEM) fuel cells and/or electrolyers.

One or more layers of catalyst material conformally coating the nanostructured support elements serves as a functional layer imparting desirable catalytic properties, and may also impart electrical conductivity and mechanical properties (e.g., strengthens and/or protects the support elements comprising each nanostructured layer), and low vapor pressure properties.

The same material used for occluding the tips of the initial nanostructured support elements may be used as a conformal catalyst coating. The conformal coating may be an organic or inorganic material. Useful inorganic conformal coating materials include platinum group metals, including Pt, Pd, Au, Ru, etc., or alloys of these metals, and other inorganic materials described herein such as transition metals. The conformal coating may comprise material such as Fe/C/N, conductive polymers (e.g., polyacetylene), and polymers derived from poly-p-xylylene, for example.

The preferred thickness of the conformal coating is typically in the range from about 0.2 to about 50 nm. The conformal coating may be deposited onto the nanostructured layer using conventional techniques, including, for example, those disclosed in U.S. Pat. Nos. 4,812,352 and 5,039,561, the disclosures of which are incorporated herein by reference. Any method that avoids disturbance of the nanostructured layer by mechanical forces can be used to deposit the conformal coating. Suitable methods include, for example, vapor phase deposition (e.g., vacuum evaporation, sputter coating, and chemical vapor deposition) solution coating or dispersion coating (e.g., dip coating, spray coating, spin coating, pour coating (i.e., pouring a liquid over a surface and allowing the liquid to flow over the microstructured layer, followed by solvent removal)), immersion coating (i.e., immersing the multilayer nanostructured film in a solution for a time sufficient to allow the layer to adsorb molecules from the solution, or colloidals or other particles from a dispersion), electroplating and electroless plating. The conformal coating may be deposited by vapor phase deposition methods, such as, for example, ion sputter deposition, cathodic arc deposition, vapor condensation, vacuum sublimation, physical vapor transport, chemical vapor transport, metalorganic chemical vapor deposition, ion assisted deposition and JET VAPOR DEPOSITION ™. In some embodiments, the conformal coating material is a catalytic metal or metal alloy.

For the deposition of a patterned conformal coating, the deposition techniques are modified by means known in the art to produce such discontinuous coatings. Known modifications include, for example, use of masks, shutters, moving substrates, directed ion beams, and deposition source beams.

In some applications, key aspects of the formed acicular nanostructured support elements is that they be easily transferable from the initial substrate into the membrane to form the MEA catalyst electrode layer; they allow a higher weight percent loading of catalyst coating on the nanostructured support elements to be deposited on the surface, preferably at least an 80 wt % ratio of catalyst coating to the combined weight of support and catalyst particles; they have sufficient number density and aspect ratio to provide a high value of surface area support for the catalyst, at least 10 to 15 times the planar area of the substrate; and the shape and orientation of the acicular nanostructured support elements on the initial substrate are conducive to uniform coating of the elements with catalyst material.

Key aspects of the catalyst deposition methods are that they result in the formation of a thin catalyst films comprising polycrystalline particles with particle sizes in the tens of nanometers range, preferably the 2-50 nm range, which uniformly coat at least a portion of the outer surface area of the support elements.

In general, the catalyst is deposited on the nanostructured support elements at nucleation sites which grow into catalyst particles. It has been discovered that the size of the resultant catalyst particle is a function of the initial size of the support element and the amount of catalyst loading. For the same catalyst loading, in mg/cm², longer catalyst supports will result in thinner catalyst films with smaller catalyst particle sizes, compared to shorter catalyst support elements of the same cross-sectional dimensions.

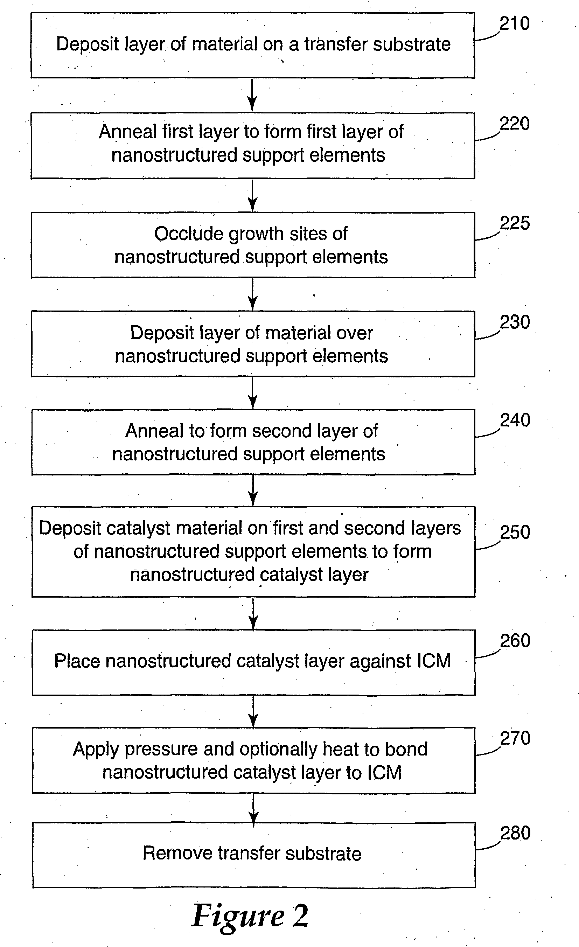

The flowchart of Figure 2 illustrates a method of making a catalyst coated membrane in accordance with embodiments of the invention. A first material is deposited 210 on a transfer substrate and annealed 220 to form a first layer of nanostructured support elements. The growth of the nanostructured support elements is inhibited 225, for example, by depositing an occluding material on the nanostructured support elements. A second layer of material is deposited 230 on the occluded nanostructured support elements. The material is annealed 240, yielding a second layer of nanostructured support elements on the first layer.

A catalyst material is deposited 250 over the first and second layers of nanostructured support elements form a nanostructured catalyst layer. The nanostructured catalyst layer is then placed against 260 one or both surfaces of an ion conductive membrane (ICM) to form an intermediate assembly. Pressure, and optionally heat, are applied 270 to the intermediate assembly to bond the catalyst layer to the ICM. The transfer substrate is removed 280 in a delamination step leaving a catalyst coated membrane.

The ion conductive membrane (ICM) may be composed of any suitable ion exchange electrolyte. The electrolytes are preferably solids or gels. Electrolytes useful in the present invention can include ionic conductive materials, such as polymer electrolytes, and ion-exchange resins. The electrolytes are preferably proton conducting ionomers suitable for use in proton exchange membrane fuel cells.

Copolymers of tetrafluoroethylene (TFE) and a co-monomer according to the formula: FSO₂-CF₂-CF₂-O-CF(CF3)-CF₂-O-CF=CF₂ are known and sold in sulfonic acid form, i.e., with the FSO₂- end group hydrolyzed to HSO₃-, under the trade name Nafion® by DuPont Chemical Company, Wilmington, Delaware. Nafion® is commonly used in making polymer electrolyte membranes for use in fuel cells. Copolymers of tetrafluoroethylene (TFE) and a co-monomer according to the formula: FSO₂-CF₂-CF₂-O-CF=CF₂ are also known and used in sulfonic acid form, i.e., with the FSO₂- end group hydrolyzed to HSO₃-, in making polymer electrolyte membranes for use in fuel cells. Most preferred are copolymers of tetrafluoroethylene (TFE) and FSO₂-CF₂CF₂CF₂CF2-O-CF=CF₂, with the FSO₂- end group hydrolyzed to HSO₃-.

Ionic conductive materials useful in the invention can be complexes of an alkalai metal or alkalai earth metal salt or a protonic acid with one or more polar polymers such as a polyether, polyester, or polyimide, or complexes of an alkalai metal or alkalai earth metal salt or a protonic acid with a network or crosslinked polymer containing the above polar polymer as a segment. Useful polyethers include: polyoxyalkylenes, such as polyethylene glycol, polyethylene glycol monoether, polyethylene glycol diether, polypropylene glycol, polypropylene glycol monoether, and polypropylene glycol diether; copolymers of these polyethers, such as poly(oxyethylene-co-oxypropylene) glycol, poly(oxyethylene-co-oxypropylene) glycol monoether, and poly(oxyethylene-co-oxypropylene) glycol diether; condensation products of ethylenediamine with the above polyoxyalkylenes; esters, such as phosphoric acid esters, aliphatic carboxylic acid esters or aromatic carboxylic acid esters of the above polyoxyalkylenes. Copolymers of, e.g., polyethylene glycol with dialky siloxanes, polyethylene glycol with maleic anhydride, or polyethylene glycol monoethyl ether with methacrylic acid are known in the art to exhibit sufficient ionic conductivity to be useful in an ICM of the invention.

Useful complex-forming reagents can include alkalai metal salts, alkalai metal earth salts, and protonic acids and protonic acid salts. Counterions useful in the above salts can be halogen ion, perchloric ion, thiocyanate ion, trifluoromethane sulfonic ion, borofluoric ion, and the like. Representative examples of such salts include, but are not limited to, lithium fluoride, sodium iodide, lithium iodide, lithium perchlorate, sodium thiocyanate, lithium trifluoromethane sulfonate, lithium borofluoride, lithium hexafluorophosphate, phosphoric acid, sulfuric acid, trifluoromethane sulfonic acid, tetrafluoroethylene sulfonic acid, hexafluorobutane sulfonic acid, and the like.

Ion-exchange resins useful as electrolytes in the present invention include hydrocarbon- and fluorocarbon-type resins. Hydrocarbon-type ion-exchange resins can include phenolic or sulfonic acid-type resins; condensation resins such as phenol-formaldehyde, polystyrene, styrene-divinyl benzene copolymers, styrene-butadiene copolymers, styrene-divinylbenzene-vinylchloride terpolymers, and the like, that are imbued with cation-exchange ability by sulfonation, or are imbued with anion-exchange ability by chloromethylation followed by conversion to the corresponding quaternary amine.

Fluorocarbon-type ion-exchange resins can include hydrates of a tetrafluoroethylene-perfluorosulfonyl ethoxyvinyl ether or tetrafluoroethylene-hydroxylated (perfluoro vinyl ether) copolymers. When oxidation and/or acid resistance is desirable, for instance, at the cathode of a fuel cell, fluorocarbon-type resins having sulfonic, carboxylic and/or phosphoric acid functionality are preferred. Fluorocarbon-type resins typically exhibit excellent resistance to oxidation by halogen, strong acids and bases, and can be preferable for composite electrolyte membranes useful in the invention. One family of fluorocarbon-type resins having sulfonic acid group functionality is the Nafion™ resins (DuPont Chemicals, Wilmington, Del., available from ElectroChem, Inc., Woburn, Mass., and Aldrich Chemical Co., Inc., Milwaukee, Wis.). Other fluorocarbon-type ion-exchange resins that can be useful in the invention comprise (co)polymers of olefins containing aryl perfluoroalkyl sulfonylimide cation-exchange groups, having the general formula (I): CH.sub.2= CH--Ar--SO₂--N--SO₂ (C₁+n F₃+2n), wherein n is 0-11, preferably 0-3, and most preferably 0, and wherein Ar is any substituted or unsubstituted divalent aryl group, preferably monocyclic and most preferably a divalent phenyl group, referred to as phenyl herein. Ar may include any substituted or unsubstituted aromatic moieties, including benzene, naphthalene, anthracene, phenanthrene, indene, fluorene, cyclopetadiene and pyrene, wherein the moieties are preferably molecular weight 400 or less and more preferably 100 or less. Ar may be substituted with any group as defined herein. One such resin is p-STSI, an ion conductive material derived from free radical polymerization of styrenyl trifluoromethyl sulfonylimide (STSI) having the formula (II): styrenyl-SO₂ N⁻ --SO₂ CF₃.

ICM's may also be composite membranes, comprising a porous membrane material combined with any of the above-described electrolytes. Any suitable porous membrane may be used. Porous membranes useful as reinforcing membranes of the invention can be of any construction having sufficient porosity to allow at least one liquid solution of an electrolyte to be infused or imbibed thereinto and having sufficient strength to withstand operating conditions in an electrochemical cell. Preferably, porous membranes useful in the invention comprise a polymer that is inert to conditions in the cell, such as a polyolefin, or a halogenated, preferably fluorinated, poly(vinyl) resin. Expanded PTFE membranes may be used, such as Poreflon™, produced by Sumitomo Electric Industries, Inc., Tokyo, Japan, and Tetratex™ produced by Tetratec, Inc., Feasterville, Pa.

Porous membranes useful in the present invention may comprise microporous films prepared by thermally-induced phase separation (TIPS) methods, as described in, e.g., U.S. Pat. Nos. 4,539,256, 4,726,989, 4,867,881, 5,120,594 and 5,260,360, the teachings of which are incorporated herein by reference. TIPS films exhibit a multiplicity of spaced, randomly dispersed, equiaxed, nonuniform shaped particles of a thermoplastic polymer, optionally coated with a liquid that is immiscible with the polymer at the crystallization temperature of the polymer, preferably in the form of a film, membrane, or sheet material. Micropores defined by the particles preferably are of sufficient size to allow electrolyte to be incorporated therein.

Polymers suitable for preparing films by the TIPS process include thermoplastic polymers, thermosensitive polymers, and mixtures of these polymers, so long as the mixed polymers are compatible. Thermosensitive polymers such as ultrahigh molecular weight polyethylene (UHMWPE) cannot be melt-processed directly but can be melt-processed in the presence of a diluent that lowers the viscosity thereof sufficiently for melt processing.

Suitable polymers include, for example, crystallizable vinyl polymers, condensation polymers, and oxidation polymers. Representative crystallizable vinyl polymers include, for example, high- and low-density polyethylene, polypropylene, polybutadiene, polyacrylates such as poly(methyl methacrylate), fluorine-containing polymers such as poly(vinylidene fluoride), and the like. Useful condensation polymers include, for example, polyesters, such as poly(ethylene terephthalate) and poly(butylene terephthalate), polyamides, including many members of the Nylon™ family, polycarbonates, and polysulfones. Useful oxidation polymers include, for example, polyphenylene oxide) and poly(ether ketone). Blends of polymers and copolymers may also be useful in the invention. Preferred polymers for use as reinforcing membranes of the invention include crystallizable polymers, such as polyolefins and fluorine-containing polymers, because of their resistance to hydrolysis and oxidation. Preferred polyolefins include high density polyethylene, polypropylene, ethylene-propylene copolymers, and poly(vinylidene fluoride).

In some embodiments, the catalyst layer may be formed directly on an diffusion current collector (DCC). The DCC can be any material capable of collecting electrical current from the electrode while allowing reactant gasses to pass through. The DCCs provide porous access of gaseous reactants and water vapor to the catalyst and membrane, and also collect the electronic current generated in the catalyst layer for powering the external load. The DCC typically comprises carbon paper or a mesh or a porous or permeable web or fabric of a conductive material such as carbon or a metal.

Diffusion current collectors (DCCs) include a microporous layer (MPL) and an electrode backing layer (EBL), where the MPL is disposed between the catalyst layer and the EBL. The carbon fiber constructions of EBLs generally have coarse and porous surfaces, which exhibit low bonding adhesion with catalyst layers. To increase the bonding adhesion, the MPL is coated on the surface of EBLs. This smoothens the coarse and porous surfaces of EBL's, which provides good bonding adhesion with catalyst layers and provides water transport properties.

The EBLs may each be any suitable electrically conductive porous substrate, such as carbon fiber constructions (e.g., woven and non-woven carbon fiber constructions). Examples of commercially available carbon fiber constructions include trade designated "AvCarb P50" carbon fiber paper from Ballard Material Products, Lowell, MA; "Toray" carbon paper which may be obtained from ElectroChem, Inc., Woburn, MA; "SpectraCarb" carbon paper from Spectracorp, Lawrence, MA; "AFN" non-woven carbon cloth from Hollingsworth & Vose Company, East Walpole, MA; and "Zoltek" carbon cloth from Zoltek Companies, Inc., St. Louis, MO. EBL's may also be treated to increase or impart hydrophobic properties. For example, EBL's may be treated with highly-fluorinated polymers, such as polytetrafluoroethylene (PTFE) and fluorinated ethylene propylene (FEP)..

Catalyst coated nanostructures, described herein, may be applied directly to the surface of the ICM but need not be embedded in their entirety. The catalyst coated nanostructured elements may be embedded only so far as necessary to create a firm attachment between the particles and the ICM. While as much as 99% of the volume of the catalyst coated nanostructured elements may be embedded within the ICM, preferably, no more than 95% of the volume of the catalyst coated nanostructured elements is contained within the ICM, and more preferably no more than 90%. In some embodiments, each catalyst coated nanostructured element may lie partially within and partially outside the ICM. In other embodiments, a part of the entire population of catalyst coated nanostructured elements may lie within the ICM and a part without, with some particles embedded, others non-embedded, and others partially embedded.

The catalyst coated nanostructured elements can be partially embedded in the surface of the ICM in a single orientation or in random directions. In the former case the catalyst coated nanostructured elements can be oriented parallel to the surface of the ICM so that in principle only catalyst on one side of the support particles contacts the solid polymer electrolyte, or they can be oriented more or less perpendicular to the ICM surface and have a fraction of their length embedded in the ICM surface, or the catalyst coated support elements can have any intermediate position or combination of positions. Furthermore, the nanostructured elements may be broken or crushed so as to both further reduce their size and allow further compaction of the electrode layer. Preferably ionomer coats the acicular support elements for good proton conduction but voids remain between the catalyst coated acicular support elements for good reactant access to the catalyst surface.

Processes suitable for applying the catalyst coated nanostructured elements to the ICM or DCC to form the MEA include static pressing with heat and pressure, or for continuous roll production, laminating, nip rolling, or calendering, followed by delamination of the initial catalyst support film substrate from the ICM surface, leaving the catalyst particles embedded.

Catalyst coated nanostructured elements, supported on a substrate, can be transferred and attached to the ICM by applying mechanical pressure and optionally heat and subsequently removing the original substrate. Any suitable source of pressure may be employed. A hydraulic press may be employed. Preferably, pressure may be applied by one or a series of nip rollers. This process is also adaptable to a continuous process, using either a flat bed press in a repeating operation or rollers in a continuing operation. Shims, spacers, and other mechanical devices intermediate between the source of pressure and the substrate may be employed for uniform distribution of pressure. The catalyst particles are preferably supported on a substrate which is applied to the ICM surface, such that the particles contact the membrane surface. In one embodiment, an ICM may be placed between two sheets of polyimide-supported layers of catalyst coated nanostructured support elements which are placed against the ICM. Additional layers of uncoated polyimide and PTFE sheets are further layered on either side of the sandwich for uniform distribution of pressure, and finally a pair of stainless steel shims is placed outside of this assembly. The substrate is removed after pressing, leaving the catalyst coated nanostructured elements attached to the ICM. The pressure, temperature and duration of pressing may be any combination sufficient to partially embed the nanostructured elements in the membrane. The precise conditions used depend in part on the nature of the nanostructured elements used.

A pressure of between about 90 and about 900 MPa may be used to transfer the nanostructured layer to the ICM. In one embodiment, a pressure of between about 180 and about 270 MPa is used. The press temperature may be selected to be sufficient for attaching the catalyst coated nanostructured elements to the ICM, but below the glass transition temperature (T_{G}) of the membrane polymer. For example, the press temperature may be between about 80° C and about 300° C, and most preferably between about 100° C. and about 150° C. The pressing time may be greater than about 1 second and may be about one minute. After loading into the press, the MEA components may be allowed to equilibrate to the press temperature, at low or no pressure, prior to pressing. Alternately, the MEA components may be preheated in an oven or other apparatus adapted for the purpose. Preferably the MEA components are preheated for 1-10 minutes before pressing. The MEA may be cooled before or after removal from the press. The platens of the press may be water cooled or cooled by any other suitable means. The MEA may be cooled for 1-10 minutes while still under pressure in the press. The MEA is preferably cooled to under about 50° C before removal from the press. A press employing vacuum platens may optionally be used.

For example, an MEA may be made using a lamination procedure consisting of transfer of the catalyst-coated nanostructure elements onto the membrane by assembling a sandwich consisting of a high gloss paper, a 2 mil (50 µm) polyimide sheet, anode catalyst, membrane, cathode catalyst, 2 mil (50 µm) polyimide and a final sheet of high gloss paper. This assembly is fed through a hot two roll laminator at 132° C. (270° F.) at a roll speed of 1 foot/minute and adequate nip pressure to result in transfer of the catalyst to the membrane. The glossy paper and polyimide are then peeled away to leave the 3 layer catalyst coated membrane (CCM).

In another embodiment, the MEA can be formed at room temperature and pressures of between about 9 and about 900 MPa by pretreatment of the ICM with the appropriate solvent. In contrast, the prior art requires elevated temperatures to obtain an intimate bond between the catalyst/ionomer layer and the ICM. By briefly exposing a perfluorosulfonic acid polymer membrane surface to a solvent, preferably heptane, that catalyst coated nanostructured support particles can be transferred to and partially embedded in the ICM from the support substrate, at room temperature.

In this embodiment, a pressure of between 9 and 900 MPa is preferably used. Most preferably, a pressure of between 45 and 180 MPa is used. Preferably the press temperature is room temperature, i.e. about 25° C., but may be anywhere between 0° and 50° C. The pressing time is preferably greater than 1 second and most preferably between 10 seconds and about one minute. Since the pressing occurs at room temperature; no preheating or post-press cool are required.

The ICM is pretreated by brief exposure to the solvent by any means, including immersion, contact with a saturated material, spraying, or condensation of vapor, but preferably by immersion. Excess solvent may be shaken off after the pretreatment. Any duration of exposure which does not compromise the ICM may be used, however, a duration of at least one second is preferred. The solvent used may be chosen from apolar solvents, heptane, isopropanol, methanol, acetone, IPA, C₈F₁₇SO₃H, octane, ethanol, THF, MEK, DMSO, cyclohexane, or cyclohexanone. Apolar solvents are preferred. Heptane is most preferred, as it is observed to have the optimum wetting and drying conditions and to allow complete transfer of the nanostructured catalysts to the ICM surface without causing the ICM to swell or distort.

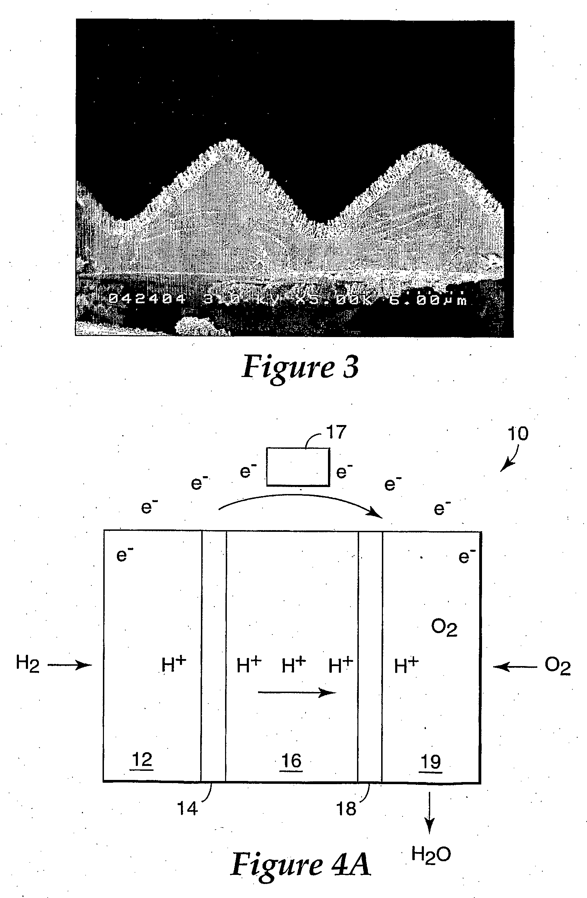

In addition to the nanostructured support elements for supporting the catalyst, the multilayer nanostructured films may also be imparted with microtextures having features sized in the 1-50 microns range, so that the catalyzed membrane surface is also replicated with these microtextures. Figure 3 is a scanning electron micrograph of a cross section of such an CCM surface where the nanostructured layer conforms to a microtextured shape. The actual nanostructured catalyst layer surface area per unit planar area of catalyst coated membrane (CCM) (measured normal to the stacking axis of the CCM) is increased by the geometric surface area factor of the microtextured substrate. In the example illustrated in Figure 3, this factor is 1.414, or the square root of two, since each part of the surface is at a 45° angle to the normal to the stacking axis of the CCM. However, the resulting increase in CCM thickness is much less than 1.414 and in practice is negligible. In addition, the depth of the microtextures can be made relatively small compared to the thickness of the ICM.

The microtextures can be imparted by any effective method. One preferred method is to form the nanostructured on an initial substrate that is microtextured, denoted herein as a microtextured catalyst transfer substrate (MCTS). The microtextures are imparted to the CCM during the step of transferring the catalyst coated nanostructured elements to the ICM, and remain after the initial substrate is stripped away. The conditions of nanostructure and CCM formation are the same as described above. Another method is to impress or mold the microtexture into a formed CCM. It is not necessary that the microtextures be uniformly geometric. Randomly sized and arrayed features can serve the same purpose.

The increase in actual catalyst area per unit CCM planar area by microtexturing the catalyst electrode area can be achieved when the catalyst layer is sufficiently thin, about an order of magnitude thinner than the size of the microtexture features, and those microtexture features are smaller than the thickness of the membrane. For example, the thickness of the catalyzed surface region of the membrane in this invention can be 2 microns or less. The width of the microtextured features may be about 12 microns and the peak to valley height of the microtextured features may be about 6 microns, and the thickness of the membrane can be 20 microns or larger.

When the microtextures are imparted by use of a microtextured substrate for the nanostructured support elements of this invention, two further advantages appear in the process for applying the catalyst and forming the CCM. A key aspect of the support particles of this invention for membrane transfer applications, e.g., fuel cells and/or electrolyzers, is that is that the support particles be formed on a substrate from which they can be transferred to the membrane surface. This requirement may result in support particles which are easily brushed off a flat substrate or damaged by winding up such a flat substrate around a core, such as would be done in a continuous web coating process. Having the nanostructured catalyst support elements on a microtextured substrate can prevent the possibility of damage because the vast majority of the much smaller catalyst coated support particles will reside in the valleys, below the peaks which will protect them from damage on roll-up. A second process advantage provided by the microtextured substrate may be realized in the process of transferring the catalyzed support particles into the CCM surface. Often heat and pressure may be used, and removing air from the interface at the start of the pressing process can be important, such as by applying a vacuum. When transferring from large pieces of planar substrate carrying the nanostructured catalyst support elements, air can be trapped between the CCM and the support substrate. Having the microtextured peaks to space the CCM and substrate apart during evacuation can allow this air to be more effectively removed in the moments just before the press-transfer commences.

MEAs formed using the catalyst layers of the present invention may be incorporated in fuel cell assemblies and stacks of varying types, configurations, and technologies. A typical fuel cell is depicted in Figure 4A. A fuel cell is an electrochemical device that combines hydrogen fuel and oxygen from the air to produce electricity, heat, and water. Fuel cells do not utilize combustion, and as such, fuel cells produce little if any hazardous effluents. Fuel cells convert hydrogen fuel and oxygen directly into electricity, and can be operated at much higher efficiencies than internal combustion electric generators, for example.

The fuel cell 10 shown in Figure 4A includes diffusion current collector (DCC) 12 adjacent an anode 14. Adjacent the anode 14 is an ion conductive membrane (ICM) 16. A cathode 18 is situated adjacent the ICM 16, and a second DCC 19 is situated adjacent the cathode 18. In operation, hydrogen fuel is introduced into the anode portion of the fuel cell 10, passing through the first DCC 12 and over the anode 14. At the anode 14, the hydrogen fuel is separated into hydrogen ions (H⁺) and electrons (e⁻).

The ICM 16 permits only the hydrogen ions or protons to pass through the ICM 16 to the cathode portion of the fuel cell 10. The electrons cannot pass through the ICM 16 and, instead, flow through an external electrical circuit in the form of electric current. This current can power an electric load 17, such as an electric motor, or be directed to an energy storage device, such as a rechargeable battery.

Oxygen flows into the cathode side of the fuel cell 10 via the second DCC 19. As the oxygen passes over the cathode 18, oxygen, protons, and electrons combine to produce water and heat.

Individual fuel cells, such as that shown in Figure 4A, can be packaged as unitized fuel cell assemblies as described below. The unitized fuel cell assemblies, referred to herein as unitized cell assemblies (UCAs) or multi-cell assemblies (MCAs), can be combined with a number of other UCAs/MCAs to form a fuel cell stack. The UCAs/MCAs may be electrically connected in series with the number of UCAs/MCAs within the stack determining the total voltage of the stack, and the active surface area of each of the cells determines the total current. The total electrical power generated by a given fuel cell stack can be determined by multiplying the total stack voltage by total current.

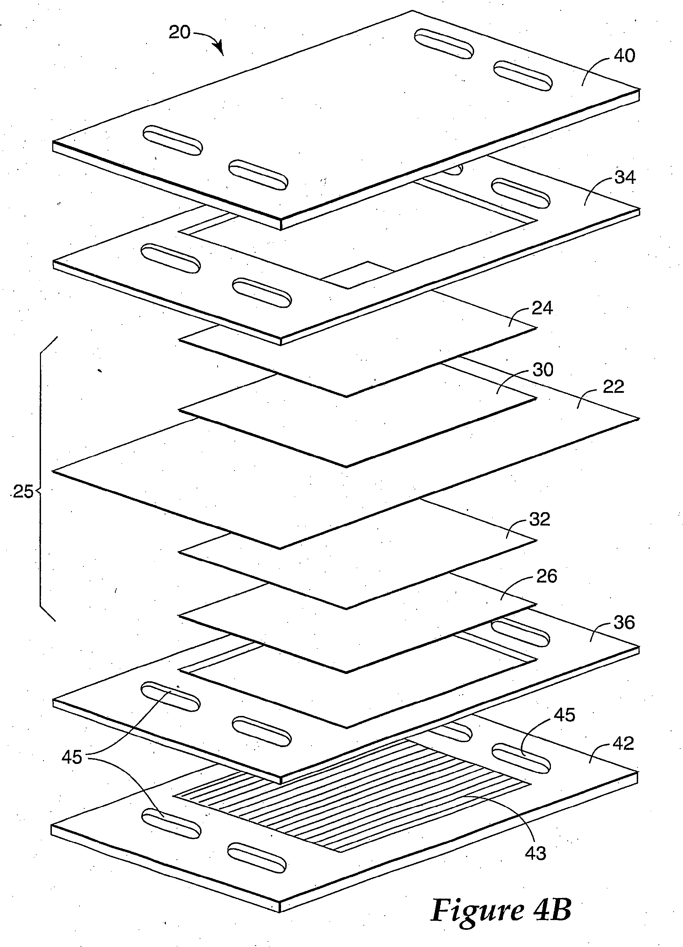

Referring now to Figure 4B, there is illustrated an embodiment of a UCA implemented in accordance with a PEM fuel cell technology. As is shown in Figure 4B, a membrane electrode assembly (MEA) 25 of the UCA 20 includes five component layers. An ICM layer 22 is sandwiched between a pair of diffusion current collectors (DCCs). An anode 30 is situated between a first DCC 24 and the membrane 22, and a cathode 32 is situated between the membrane 22 and a second DCC 26. Alternatively, the UCA can contain two or more MEAs to form an MCA.

In one configuration, an ICM layer 22 is fabricated to include an anode catalyst layer 30 on one surface and a cathode catalyst layer 32 on the other surface. This structure is often referred to as a catalyst-coated membrane or CCM. According to another configuration, the first and second DCCs 24, 26 are fabricated to include an anode and cathode catalyst layer 30, 32, respectively. In yet another configuration, an anode catalyst coating 30 can be disposed partially on the first DCC 24 and partially on one surface of the ICM layer 22, and a cathode catalyst coating 32 can be disposed partially on the second DCC 26 and partially on the other surface of the ICM layer 22.

The DCCs 24, 26 are typically fabricated from a carbon fiber paper or non-woven material or woven cloth. Depending on the product construction, the DCCs 24, 26 can have a microporous layer on one or both sides. The DCCs 24, 26, as discussed above, can be fabricated to include or exclude a catalyst coating.

In the particular embodiment shown in Figure 4B, MEA 25 is shown sandwiched between a first edge seal system 34 and a second edge seal system 36. Adjacent the first and second edge seal systems 34 and 36 are flow field plates 40 and 42, respectively. Each of the flow field plates 40, 42 includes a field of gas flow channels 43 and ports 45 through which hydrogen and oxygen feed fuels pass. In the configuration depicted in Figure 4B, flow field plates 40, 42 are configured as monopolar flow field plates, in which a single MEA 25 is sandwiched there between.

The edge seal systems 34, 36 provide the necessary sealing within the UCA package to isolate the various fluid (gas/liquid) transport and reaction regions from contaminating one another and from inappropriately exiting the UCA 20, and may further provide for electrical isolation and hard stop compression control between the flow field plates 40, 42.

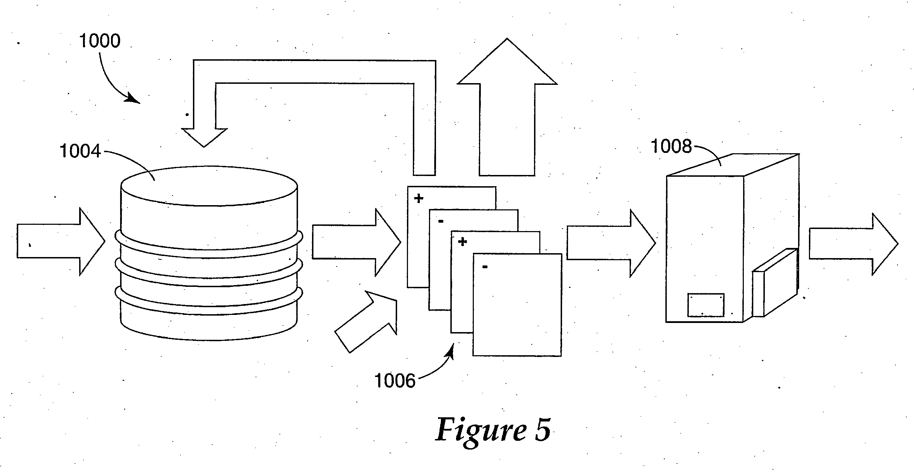

Figures 5-8 illustrate various systems for power generation that may incorporate fuel cell assemblies having catalyst layers formed as described herein. The fuel cell system 1000 shown in Figure 5 depicts one of many possible systems in which a fuel cell assembly as illustrated by the embodiments herein may be utilized.

The fuel cell system 1000 includes a fuel processor 1004, a power generation section 1006, and a power conditioner 1008. The fuel processor 1004, which includes a fuel reformer, receives a source fuel, such as natural gas, and processes the source fuel to produce a hydrogen rich fuel. The hydrogen rich fuel is supplied to the power generation section 1006. Within the power generation section 1006, the hydrogen rich fuel is introduced into the stack of UCAs of the fuel cell stack(s) contained in the power generation section 1006. A supply of air is also provided to the power generation section 1006, which provides a source of oxygen for the stack(s) of fuel cells.

The fuel cell stack(s) of the power generation section 1006 produce DC power, useable heat, and clean water. In a regenerative system, some or all of the byproduct heat can be used to produce steam which, in turn, can be used by the fuel processor 1004 to perform its various processing functions. The DC power produced by the power generation section 1006 is transmitted to the power conditioner 1008, which converts DC power to AC power or DC power to DC power at a different voltage for subsequent use. It is understood that AC power conversion need not be included in a system that provides DC output power.

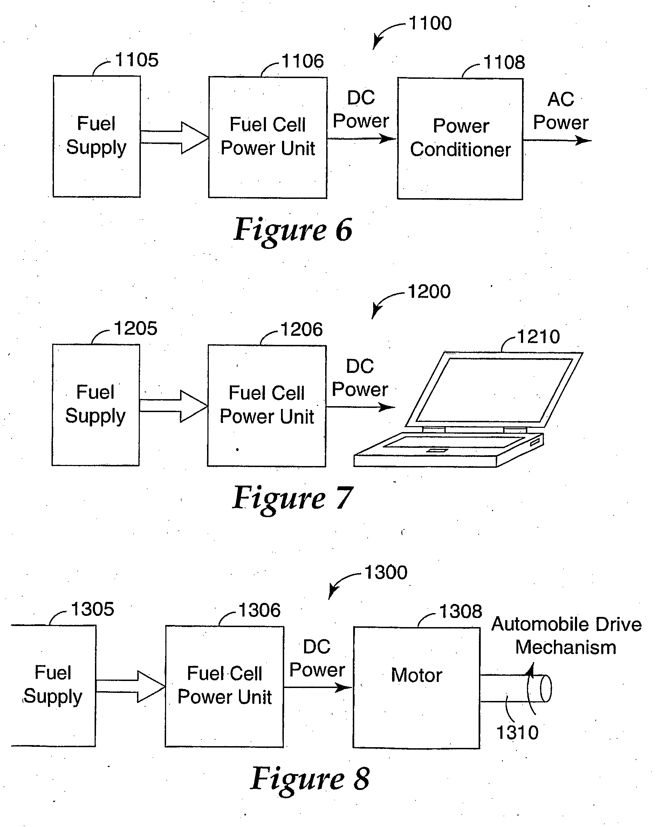

Figure 6 illustrates a fuel cell power supply 1100 including a fuel supply unit 1105, a fuel cell power generation section 1106, and a power conditioner 1108. The fuel supply unit 1105 includes a reservoir that contains hydrogen fuel which is supplied to the fuel cell power generation section 1106. Within the power generation section 1106, the hydrogen fuel is introduced along with air or oxygen into the fuel cell stack(s) contained in the power generation section 1106.

The power generation section 1106 of the fuel cell power supply system 1100 produces DC power, useable heat, and clean water. The DC power produced by the power generation section 1106 may be transmitted to the power conditioner 1108, for DC to AC conversion or DC to DC conversion, if desired. The fuel cell power supply system 1100 illustrated in Figure 6 may be implemented as a stationary or portable AC or DC power generator, for example.

In the implementation illustrated in Figure 7, a fuel cell system uses power generated by a fuel cell power supply to provide power to operate a computer. As described in connection with Figure 7, fuel cell power supply system includes a fuel supply unit 1205 and a fuel cell power generation section 1206. The fuel supply unit 1205 provides hydrogen fuel to the fuel cell power generation section 1206. The fuel cell stack(s) of the power generation section 1206 produce power that is used to operate a computer 1210, such as a desk top or laptop computer.

In another implementation, illustrated in Figure 8, power from a fuel cell power supply is used to operate an automobile 1310. In this configuration, a fuel supply unit 1305 supplies hydrogen fuel to a fuel cell power generation section 1306. The fuel cell stack(s) of the power generation section 1306 produce power used to operate a motor 1308 coupled to a drive mechanism of the automobile 1310.

### Example 1:

In this example, four nanostructured layers were formed on a microstructured catalyst transfer substrate referred hereafter as the MCTS. The MCTS is a 50 micron thick, ∼30 cm wide roll of polyimide, having an acrylate resin coating which is formed, as taught in US 6,136,412, into a series of parallel V-shaped grooves and peaks, 12 microns deep (peak to valley) and 24 microns peak to peak with a 90 degree included angle. A first layer of PR149, nominally 1680 Angstroms thick (planar equivalent) was coated onto the MCTS web. It was annealed in vacuum as a continuous roll by passing the web over a 6 ft diameter drum heated to 300 C at a web speed of 1-2 ft/min, to produce the nanostructured film. Pt was then sputtered onto the web to a mass loading of ~ 0.14 mg/cm², equivalent to about 650 Angstroms of Pt per unit planar. Other references to forming and coating the nanostructured PR149 films can be found in various patents incorporated herein.

An ~ 28cm x 28cm sheet of the so coated MCTS, Example 1-1 was then placed in another vacuum chamber and a 1500 Angstrom thick second layer of PR149 was deposited onto the first layer whiskers. The sample sheet was then annealed by heating in vacuum to 260-264C and cooled. Then an additional 500 Angstroms of Pt was applied by e-beam evaporation to the annealed sheet and a small sample (Example 1-2) cut out for examination by SEM.

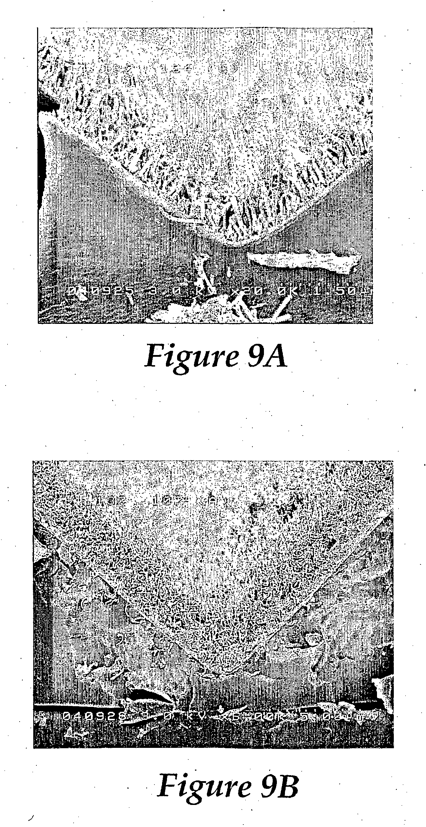

Figure 9A is a SEM cross-sectional view of sample Example 1-2 at 20,000 X magnification with two layers of nanostructured films as described above and grown on a microstructured MCTS substrate with 12 micron deep valleys. The scale in microns is shown below the line of eleven dots.

It can be seen in Figure 9A that there is a second layer of PR149 whiskers grown on top of the original layer. There are fewer whiskers since the amount of PR149 deposited in the second layer was less. The fact that the PR149 grows into a second layer of whiskers rather than continuing to grow the original whiskers longer is because the first layer of Pt coated onto the first layer of PR149 whiskers occludes the screw dislocation growth site at the tips of the whiskers. However, it was not expected that the additional PR149 would grow into a complete second layer rather than, e.g., growing as smaller crystallites off the sides of the original whiskers.

The procedure just described for growing a second layer of nanostructured film was then repeated to generate a third layer of whiskers on top of the first two and an additional 500 Angstroms of Pt deposited. Another small sample, Example 1-3, was removed for SEM examination.

Finally, the procedure just described for growing a second layer of nanostructured film was then repeated to generate a fourth layer of whiskers on top of the first three and an additional 500 Angstroms of Pt deposited. Another small sample, Example 1-4, was removed for SEM examination. A SEM cross-section of this sample is shown in Figure 9B, at a lower magnification than in Figure 9A, due to the increased thickness of the multiple layers. In Figure 9B, the overall thickness of the 4-layer nanostructured film is ~ 2.7 microns, compared to the original single layer film thickness of ~ 0.7 microns, which is ~ ¼ as large.

This process could be repeated to build up arbitrarily thick, high surface area, porous films. Since the PR149 deposition, annealing and catalyst coating can be done in a single continuous web coating process, multiple layers could be built up simply by reversing the web direction back and forth over the coating sources and intermediate annealing station.

### Example 2:

In this example, two nanostructured layers were formed on a different MCTS substrate, using larger amount of PR149 than in Example 1, and the subsequent surface areas are measured by two methods. The MCTS is a 50 micron thick, - 30 cm wide roll of polyimide, having an acrylate resin coating which is formed, as taught in US 6,136,412, into a series of parallel V-shaped grooves and peaks 6 microns deep and 12 microns peak to peak with a 90 degree angle. A first layer of PR149, approximately 2100 Angstroms thick (planar equivalent) was coated onto the MCTS roll, and annealed in vacuum as a continuous roll to produce the nanostructured film.

An approximately 28cm x 28cm square piece of the above Pt/PR149-coated MCTS was then installed into another vacuum system and e-beam evaporation coated with 1000 Angstroms of Pt. Then a second layer, 150nm thick, of PR149 was vapor deposited onto it as in Example 1, and annealed in the range of 260-265C, to convert the additional PR149 to the whisker phase. Again, as discussed in Example 1, since the screw dislocations at the tips of the first PR149 layer's whiskers were occluded by Pt, the second layer of PR149 did not continue to grow on the first layer's whisker tips, but rather grew a completely new second layer of whiskers on top of the first layer of Pt coated whiskers. This was Example 2-2.

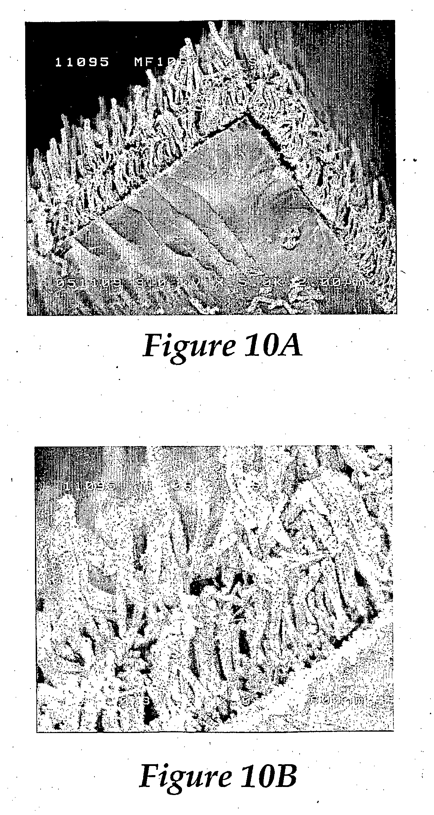

Several other nominally identical sheets of sample were also made, having designations, Examples 2-3, 2-4, 2-5, and 2-6. Figures 10A and 10B show SEM cross-sections at two magnifications of the resulting double layer nanostructured film on the microstructured substrate. The double layer nature of the film is clearly evident.

The average areal number density of whiskers, N, was determined for this sample to be N = 31/µm². The average whisker width was W = 0.09 microns and the average whisker length was L = 0.67 microns. From visual inspection, it is difficult to estimate the roughness of the Pt coating on each individual whisker. The widths of the whiskers is approximated to account for some level of roughness by visualizing the surface to be smooth and taking the diameter of a whisker to be that at its largest point. By including the roughness factor in the width estimate, we take R = 1. Since α = 1.414 for the MCTS substrate, an estimate of the geometric surface area of the top layer of whiskers is S = 1.414xπWxLxNxR= 8.3 cm²/cm² of planar area.

An equivalent measurement of the geometric parameters from SEM's of the first layer of PR149 whiskers on the starting coated MCTS gives N = 35/µm, L = 0.67microns, and W = 0.09 microns, for S= 9.4 cm²/cm². The total calculated estimate of geometric surface area is the sum of the first and second layers, or Stotal =17.7 cm²/cm².

Several membrane electrode assemblies (MEA's) were fabricated for fuel cell evaluation and measurement of the electrochemical surface areas. To make an MEA, the catalysts are transferred from the initial MCTS substrate to either side of a polymeric ion exchange membrane, made e.g. from Nafion™ ionomer. The catalysts were transferred by hot roll lamination to PEM membranes made by solution casting and drying of Nafion ™ into 30 micron thick membranes. MEA samples were fabricated by lamination conditions described above and in the patents previously incorporated. The MEA's had either the double layer catalysts of this invention on one side (cathode) or both sides (anode and cathode). For the cases in which the double layer was on one side, the other side of the MEA had a standard single layer catalyst electrode layer. The electrochemically active surface areas (ESCA) of the catalyst electrodes were measured from these samples using hydrogen adsorption/desorption cyclic voltammetry techniques, well known to those skilled in the art of fuel cell catalyst characterization. In all cases the ECSA could be measured for both electrodes of the MEA. The resulting ECSA values for several MEA's are compared in Table 1 below to a standard MEA having only a single layer catalyst electrode on both sides. Table 1 provides a summary of measured electrochemical surface areas of electrodes made with double layer catalysts from Example 2.

**Table 1**

| Fuel Cell MEA Number | Anode/Cathode Number of Layers | Anode/Cathode ECSA Values (cm²/cm²) |
|---|---|---|
| | | |
| FC-1 - control | Single Layer/Single Layer | 11/11 |
| FC-2 | Single Layer/ Double Layer | 7.6/17.9 |
| FC-3 | Single Layer/ Double Layer | 10.5/16.6 |
| FC-4 | Double Layer/ Double Layer | 19/19 |

As can be seen in Table 1, the double layer of nanostructures adds approximately double the surface area of a single layer catalyst layer. Furthermore, the values are in remarkably good agreement with the calculated geometric estimates above for the double layer, obtained from the SEM micrographs of Stotal = 17.7 cm²/cm².

The foregoing description of the various embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A method of making an electrode for a proton exchange membrane fuel cell, comprising:
depositing a first layer of material on a substrate, which comprises depositing an organic-based material which comprises perylene red;
annealing the first layer of material to form a first layer of nanostructured support elements;
occluding growth sites of the nanostructured support elements of the first layer by depositing an occluding material on the first layer of nanostructured support elements, wherein the occluding material comprises a metal; **characterized by**
depositing a second layer of material on the first layer of nanostructured support elements, which comprises depositing an organic-based material which comprises perylene red;
annealing the second layer of material to form a second layer of nanostructured support elements; and
depositing a catalyst material on the first and second layers of nanostructured support elements to form a catalyst coated multilayered nanostructured film, which comprises depositing a platinum group metal.

2. The method of claim 1, further comprising forming about two to about ten layers of nanostructured support elements by occluding growth sites of previously formed layers of nanostructured support elements, depositing layers of additional material on the previously formed layers of nanostructured support elements, and annealing the layers of additional material to form additional layers of nanostructured support elements.

## Patentansprüche

1. Verfahren zur Herstellung einer Elektrode für eine Protonenaustausch-membran-Brennstoffzelle, umfassend:
Abscheiden einer ersten Materialschicht auf einem Substrat, welches das Abscheiden eines Materials auf organischer Basis umfasst, das Perylenrot umfasst;
Tempern der ersten Materialschicht, um eine erste Schicht von nanostrukturierten Trägerelementen zu bilden;
Okkludieren von Wachstumsstellen der nanostrukturierten Trägerelemente der ersten Schicht durch Abscheiden eines Okklusionsmaterials auf der ersten Schicht von nanostrukturierten Trägerelementen, wobei das Okklusionsmaterial ein Metall umfasst; **gekennzeichnet durch** Abscheiden einer zweiten Materialschicht auf der ersten Schicht von nanostrukturierten Trägerelementen, welches das Abscheiden eines Materials auf organischer Basis umfasst, das Perylenrot umfasst;
Tempern der zweiten Materialschicht, um eine zweite Schicht von nanostrukturierten Trägerelementen zu bilden; und
Abscheiden eines Katalysatormaterials auf der ersten und zweiten Schicht von nanostrukturierten Trägerelementen, um eine katalysatorbeschichtete mehrschichtige nanostrukturierte Folie zu bilden, welches das Abscheiden eines Platinumgruppenmetalls umfasst.

2. Verfahren nach Anspruch 1, ferner umfassend die Bildung von etwa zwei bis etwa zehn Schichten von nanostrukturierten Trägerelementen durch Okkludieren von Wachstumsstellen von zuvor gebildeten Schichten von nanostrukturierten Trägerelementen, Abscheiden von Schichten von zusätzlichem Material auf den zuvor gebildeten Schichten von nanostrukturierten Trägerelementen und Tempern der Schichten von zusätzlichem Material, um zusätzliche Schichten von nano strukturierten Trägerelementen zu bilden.

## Revendications

1. Procédé de fabrication d'une électrode destinée à une pile à combustible à membrane d'échange de protons, comprenant :
le dépôt d'une première couche de matériau sur un substrat, qui comprend le dépôt d'un matériau à base organique qui comprend du rouge de pérylène ;
la renaturation de la première couche de matériau de façon à former une première couche d'éléments de support nanostructurés ;
l'occlusion des sites de croissance des éléments de support nanostructurés de la première couche en déposant un matériau d'occlusion sur la première couche d'éléments de support nanostructurés, dans lequel le matériau d'occlusion comprend un métal ; **caractérisé par**
le dépôt d'une deuxième couche de matériau sur la première couche d'éléments de support nanostructurés, qui comprend le dépôt d'un matériau à base organique qui comprend du rouge de pérylène ;
la renaturation de la deuxième couche de matériau de façon à former une deuxième couche d'éléments de support nanostructurés ; et
le dépôt d'un matériau catalyseur sur les première et deuxième couches d'éléments de support nanostructurés de façon à former un film nanostructuré multicouche revêtu de catalyseur, qui comprend le dépôt d'un métal du groupe du platine.

2. Procédé selon la revendication 1, comprenant en outre la formation d'environ deux à environ dix couches d'éléments de support nanostructurés par occlusion des sites de croissance des couches précédemment formées d'éléments de support nanostructurés, le dépôt de couches de matériau supplémentaire sur les couches précédemment formées d'éléments de support nanostructurés et la renaturation des couches de matériau supplémentaire de façon à former des couches supplémentaires d'éléments de support nanostructurés.
